# EUROPÄISCHE PATENTANMELDUNG

(11) **EP 3 890 276 A1**
(43) Veröffentlichungstag der Anmeldung: **06.10.2021**
(21) Anmeldenummer: 20167243.3
(22) Anmeldetag: 31.03.2020
(51) Int. Cl.: H04L 29/08

(54) **INTEGRIEREN EINER MASCHINE IN EIN BESTEHENDES DISTRIBUTED-LEDGER-NETZWERK**

(71) Anmelder: Siemens Aktiengesellschaft, 80333 München (DE)
(72) Erfinder: Thurau, Oliver, 67117 Limburgerhof (DE)

(57) **Zusammenfassung**

Die Erfindung betrifft ein System bestehend aus einer Mehrzahl von vernetzten und mittels eines Managementsystems verwalteten Maschinen, wobei die Maschinen und das Managementsystem jeweils Knoten eines Distributed-Ledger-Netzwerkes bilden, wobei die Maschinen jeweils Maschineneigenschaften als Datensatz hinterlegt auf einem jeweiligen Speicher der jeweiligen Maschine aufweisen, wobei die Maschinen jeweils ferner einen jeweiligen normalisierten Smart Contract auf demselben oder einem weiteren Speicher aufweisen, wobei das Managementsystem einen Integrations-Contract aufweist, wobei der Integrations-Contract jeweilige normalisierte Smart Contracts auf vorherige, im Distributed-Ledger-Netzwerk bereits verfügbare Smart Contracts abgleicht und in das Distributed Ledger Netzwerk transformiert, und wobei ein transformierter Smart Contract ein Kollaborationsmodell zwischen den vernetzten Maschinen regelt und in den Distributed-Ledger-Netzwerk computerimplementiert ausgeführt wird.

## Beschreibung

Die Erfindung betrifft ein System bestehend aus einer Mehrzahl von vernetzten und mittels eines Managementsystems verwalteten Maschinen, wobei die Maschinen und das Management-system jeweils Knoten eines Distributed Ledger Netzwerkes bilden, sowie ein Verfahren zum Integrieren einer Maschine in ein bestehendes Distributed Ledger Netzwerkes.

In der industriellen Automatisierung gewinnt die sogenannte Maschinen-zu-Maschinen-Kommunikation oder Machine-to-Machine-Kommunikation, kurz M2M-Kommunikation, vor allem im Zusammenhang mit den Entwicklungen in sogenannten Industrie-4.0-Szenarien immer mehr an Bedeutung. Dabei tauschen Maschinen insbesondere selbst initiiert untereinander Fähigkeiten aus und handeln vielfach aufgrund ihrer Fähigkeiten ein Kollaborationsmodell aus. Insbesondere im Rahmen von Smart Manufacturing, d.h. Fertigung unter Einbeziehung intelligenter autonom oder teilautonom handelnder Maschinen, ist die M2M-Kollaboration die Basis für Fertigungsanlagen der Zukunft.

Für M2M-Kollaborations-Szenarien wie beispielsweise im Umfeld von Smart Mobility, z.B. E-Charging oder Smart Parking, werden bereits über Distributed Legder Netzwerke verwaltete und ausführbare Smart Contracts verwendet. Dafür kann bislang für eine Blockchain-Technologieplattform, die beispielsweise für ein E-Charging-System von Betreibern und Anwendern gemeinsam genutzt wird, in der zugehörigen Programmiersprache der Plattform ein Smart Contract eingebracht oder genutzt werden. Beispielsweise nutzt die Plattform Ethereum für ihre Smart Contracts die Programmiersprache Solidity. Die Plattform Hyperledger Fabric nutzt für die dort Chaincode genannten Smart Contracts die Programmiersprachen Go oder NodeJS.

Bislang gibt es keinen Standard für Smart Contracts. Somit besteht der Bedarf, den Einsatz von Smart Contracts für Maschinen im Industrieumfeld zu vereinfachen.

Diese Aufgabe wird durch die Merkmale der unabhängigen Ansprüche gelöst. Vorteilhafte Ausgestaltungen sind in den abhängigen Ansprüchen angegeben.

Die Erfindung betrifft ein System bestehend aus einer Mehrzahl von vernetzten und mittels eines Managementsystems verwalteten Maschinen, wobei die Maschinen und das Management-system jeweils als Knoten oder Clients eines Knotens eines Distributed Ledger Netzwerkes interagieren, wobei die Maschinen jeweils Maschineneigenschaften als Datensatz hinterlegt auf einem jeweiligen Speicher der jeweiligen Maschine aufweisen, wobei die Maschinen jeweils ferner einen jeweiligen normalisierten Smart Contract auf demselben oder einem weiteren Speicher aufweisen, wobei das Managementsystem einen Integrations-Contract aufweist, wobei der Integrations-Contract ausgebildet ist jeweilige normalisierte Smart Contracts auf vorherige, im Distributed Ledger Netzwerk bereits verfügbare Smart Contracts abzugleichen und in das Distributed Ledger Netzwerk zu transformieren, und wobei ein transformierter Smart Contract ausgebildet ist, ein Kollaborationsmodell zwischen den vernetzten Maschinen zu regeln und in dem Distributed Ledger Netzwerk computerimplementiert ausgeführt zu werden.

Das erfindungsgemäße System basiert somit auf einem System aus vernetzten Maschinen, wobei ein Managementsystem, beispielsweise ein Managementsystem von IoT-Geräten, die vernetzten Maschinen verwaltet. Das Managementsystem kann dabei zentral oder auf mehrere der Maschinen dezentral verteilt ausgebildet sein. Beispielsweise sind die Maschinen verschiedene Komponenten eines Anlagensystems, beispielsweise Roboter, Werkzeugmaschinen, Fertigungsmaschinen, AGVs (Autonomous Guided Vehicles), usw.. Solche oder ähnliche sogenannte IoT-(Internet of Things)-Geräte sollen innerhalb einer Anlage flexibel Information betreffend einen optimierten Einsatz der jeweiligen Maschine oder eine optimierte Auslastung bei Vergleich mehrerer Maschinen miteinander ermöglichen. Dafür werden Maschineneigenschaften auf den jeweiligen Maschinen hinterlegt, wobei die Eigenschaften als Datensatz hinterlegt auf einem jeweiligen Speicher vorliegen, so dass der Austausch von relevanten Informationen insbesondere direkt zwischen den vernetzten Maschinen erfolgen kann.

Zusätzlich sind die Maschinen nun in einem Distributed Ledger Netzwerk miteinander verbunden, d.h. die Maschinen bilden jeweils entweder selbst einen Knoten in dem Distributed Ledger Netzwerk, oder interagieren als Client eines bestimmten existierenden Knotens im DLT Netzwerk. Beispielsweise handelt es sich um ein Blockchain-Netzwerk. Die Maschinen weisen ferner einen normalisierten Smart-Contract auf, vorteilhafterweise auf demselben Speicher, auf dem auch die Maschineneigenschaften hinterlegt sind. Alternativ könnte ein weiterer Speicher zum Einsatz kommen.

Als normalisierter Smart-Contract im Sinne der vorliegenden Anmeldung wird ein Smart-Contract verstanden, der beispielsweise in einer normalisierten oder standardisierten Beschreibungssprache oder Sprache hinterlegt ist. Dabei ist nicht zwingenderweise nur eine Sprache als Standard vorgesehen. Insbesondere können mehrere Standards existieren, die für das Format des Smart Contract in Frage kommen, und der normalisierte Smart Contract in einer dieser Standards formatiert sein.

Der normalisierte Smart Contract könnte auch zu einem standardisierten Smart Contract erhoben werden.

Das Management-System der vernetzten Maschinen weist einen Integrations-Contract auf. Dessen Funktionsweise besteht zum einen darin, die normalisierten Smart Contracts, die von einer Maschine mitgebracht werden, auf schon im Distributed-Ledger-Netzwerk vorhandene Smart Contract zu überprüfen. Dabei findet ein Abgleich statt, ob der Smart Contract bereits bekannt ist. Zudem besteht die Funktionsweise des Integrations-Contracts darin, einen von einer Maschine mitgebrachten normalisierten Smart Contract in das Distributed Ledger Netzwerk zu transformieren. Der Schritt des Transformierens könnte auch als Konvertieren bezeichnet werden. Damit wird der Schritt bezeichnet, den normalisierten Smart Contract in eine für Maschinen ausführbare Form zu bringen. Im einfachsten Fall kann darunter auch nur das Aufrufen des Codes zu Zwecken der Ausführung fallen.

Der transformierte und damit ausführbare Smart Contract regelt dann ein Kollaborationsmodell zwischen den vernetzten Maschinen. Vorteilhafterweise werden im Smart Contract Bedingungen abgebildet, unter welchen eine Nutzung der Maschine möglich ist. Beispielsweise werden dabei Nutzungsbedingungen wie Pay-per-Use-Bedingungen vorgeschlagen, die von anderen Maschinen im Netzwerk angenommen werden können.

Der transformierte Smart Contract wird dann in dem Distributed Ledger Netzwerk computerimplementiert ausgeführt. Beispielsweise spezifiziert er, was bei einer Transaktion zu prüfen ist oder welche Folgeaktivitäten zu initiieren sind. Ferner können beispielsweise durch den Smart Contract Programme automatisiert ausgeführt werden. Smart Contracts führen dabei eine im Programm-Code hinterlegte Logik aus, die Abhängigkeiten zwischen kollaborierenden Maschinen beschreibt. Beispielsweise sind dort Bedingungen hinterlegt, welche von einem Kollaborationspartner, also einer der Maschinen im Netzwerk, erfüllt oder nachgewiesen werden müssen, damit Aktionen auf der anderen Maschine, die beispielsweise den Smart Contract vorgibt, gestartet oder ausgeführt werden.

Auf vorteilhafte Weise wird mit dem vorgeschlagenen System die vollständige Automatisierung der Integration von neuen oder externen Maschinen in ein Netzwerk, beispielsweise ein Betreibernetzwerk, von Maschinen, insbesondere eine Anlage oder Fabrik, ermöglicht. Vorteilhafterweise wird eine Integration eines auf ein Distributed Ledger Netzwerk bezogenen Informationsmodells ermöglichen. In Distributed Ledger Netzwerken oder Blockchain-Netzwerken wird die Integration oder das Onboarding von Smart-Contracts flexibel und unabhängig von konkreten, im Maschinennetzwerk verwendeten Smart Contract-Sprachen oder Formaten, ermöglicht. Insbesondere wird vorteilhaft ein vorhandenes Maschinennetzwerk innerhalb einer IoT-Anlage zusätzlich um die Möglichkeit ergänzt, intelligente automatisierte Verträge zwischen den Maschinen aufzusetzen und zu nutzen.

Gemäß einer Ausgestaltung umfasst das Kollaborationsmodell Geschäftsbedingungen zum Durchführen von Arbeitsschritten und/ oder Nutzungsbedingungen und/ oder Statusänderungen je nach durchgeführtem Arbeitsschritt. Beispielsweise wird die Art eines Abrechnungsmodells für Leistungen der Maschine spezifiziert, beispielsweise ein Pay-per-Use-Modell oder ein pay-per-part-Modell oder ein pay-per-time-Modell. Dabei kann ferner festgelegt sein, für welchen Betrag, beispielsweise Betrag an Token, welche Art der Leistung der Maschine erbracht werden kann. Beispielsweise ist festgelegt, welche Art der Leistung in welchem Umfang erbracht werden kann. Beispielsweise können für einen bestimmten Betrag an Token eine bestimmte Anzahl an Schrauben verschraubt oder Löchern gebohrt oder Nieten gestanzt werden. Die Token repräsentieren dabei in dem Distributed Ledger Netzwerk beispielsweise einen gewissen Nutzen oder Wert. Das DLT-Netzwerk verwendet beispielsweise eine oder evtl. mehrere bestimmte Token-Definitionen und setzt diese einheitlich ein.

Zudem legt das Kollaborationsmodell beispielsweise ferner fest, welche Statusänderungen der Smart Contract veranlasst. Je nach Erfüllung von Bedingungen wie durchgeführten Arbeitsschritten wird durch den Smart Contract eine Änderung des Status ausgelöst, beispielsweise wird der Status aller an einem Smart Contract beteiligten Maschinen derart aktualisiert, dass durchgeführte Schritte wie die durchgeführte Leistung oder die durchgeführte Bezahlung dokumentiert sind. Insbesondere erfolgt eine Übertragung von Tokens. Es ist ferner denkbar, dass der Smart Contract eine Giralgeldtransaktion auslöst, wenn er über ein entsprechendes Konto verfügen kann. Beispielsweise kann mittels des aktualisierten Status ferner für andere Maschinen im Netzwerk ersichtlich werden, dass eine Maschine für einen bestimmten Nutzungszeitraum belegt oder nicht verfügbar ist.

Gemäß einer Ausgestaltung liegen die Maschineneigenschaften in einem standardisierten, insbesondere mittels der Modul-Type-Package-Methode austauschbaren, Format vor. Der jeweilige normalisierte Smart Contract liegt im gleichen standardisierten Format vor. Dies ermöglicht vorteilhaft ein besonders einfaches Abarbeiten der Informationen, die von der Maschine geliefert werden, d.h. der Maschineneigenschaften einerseits und der Smart Contract-Bedingungen andererseits. Beispielsweise können sich somit vorteilhafterweise Argumente des Smart Contracts an standardisierten Attributen des Verzeichnisses mit den Maschineneigenschaften orientieren. Beispielsweise sind in einem Merkmal-Repository der Maschine Attribute gelistet, welche als Argument dem Smart Contract übergeben werden können. Der Smart Contract "versteht" somit diese Argumente ohne weitere Konvertierung oder Transformation.

Vorteilhafter Weise kann ein in dem System aus vernetzten Maschinen bereits bestehendes oder installiertes Aushandeln von Fähigkeiten somit direkt auch für das Ausführen von Smart Contracts zwischen kollaborierenden Maschinen benutzt werden. Dabei wird das Konzept des Module Type Package, kurz MTP, genutzt, welches durch eine funktionale Beschreibung, beispielsweise aus Engineering-Daten einer Automatisierung, erzeugt wird. Durch den Einsatz eines solchen Beschreibungsstandards werden Eigenschaften von Anlagenkomponenten oder Schnittstellen oder Zustandsbeschreibungen normiert übermittelt. Durch die Ausweitung des MTP-Konzepts auf in einem Distributed Ledger Netzwerk ausführbare Smart Contracts als neues Segment (Facette) wird deren Einbindung in ein Maschinen-netzwerk ermöglicht.

Gemäß einer Ausgestaltung ist als standardisiertes Format Automation Markup-Language oder mindestens ein ausführbares Code-Format, insbesondere Solidity oder Hyperledger Fabric Chaincode, insbesondere NodeJS oder Go, vorgesehen. In einer vorteilhaften Variante wird somit ein generalisierter Smart Contract in dem Automation Markup-Language-Format, kurz AML-Format, eingesetzt. Dieser wird mit Hilfe einer Normalisierungsfunktion anschließend auf einem Knoten des Distributed Ledger Netzwerkes in eine ausführbare Form gebracht. Beispielsweise liegt der Smart Contract in AML vor und wird mittels einer Normalisierungsfunktion in das Code-Format Solidity gebracht. Nutzen dann unterschiedliche kollaborierende Maschinen innerhalb des Maschinennetzwerkes beispielsweise Ethereum als Distributed Ledger Plattform und möchten somit Smart Contracts in der Programmiersprache Solidity ausführen, so können sie die Information des Smart Contracts, der von einer Maschine in AML-Code mitgebracht wird, konvertieren oder transformieren und dann in Solidity ausführen.

In einer alternativen vorteilhaften Variante ist der Smart Contract in mindestens einem ausführbaren Code-Format, beispielsweise in mehreren ausführbaren Code-Formaten, vorgesehen. Beispielsweise wird er quasi doppelt im Speicher hinterlegt, beispielsweise einmal als Solidity-Code und einmal als Hyperledger Fabric Chaincode. Somit ist ein auf verschiedenen Plattformen ausführbares Code-Format direkt auf der Maschine verfügbar. Das Anwenden einer Normalisierungsfunktion besteht dann vorteilhafterweise lediglich noch in den Schritt des Aufrufens. Die konkreten, in ausführbarem Code-Format hinterlegten Smart Contracts sind dann flexibel auf verschiedenen Plattformen wie beispielsweise Ethereum oder Hyperledger Fabric einsetzbar. Beispielsweise kann eine Maschine so flexibel in verschiedenen Anlagen in ein bestehendes Distributed Ledger Netzwerk integriert werden. Dies kann insbesondere an Schnittstellen zwischen verschiedenen Anlagen verschiedener Hersteller, beispielsweise bei in Logistik-Schritten eingesetzten Maschinen, sinnvoll sein.

Gemäß einer Ausgestaltung beschreibt der Smart Contract ein dynamisches Model für logische Verknüpfungen zwischen den Maschinen. Ein solches dynamisches Model, welches logische Abhängigkeiten der Maschinen und der von den jeweiligen Maschinen ausgeführten Ausführungsschritte oder Ausführungsaufgaben, beschreibt, liegt beispielsweise in einem Programm-Code vor. Beispielsweise beschreibt der Smart Contract automatisch auszuführende Schritte oder Statusänderungen und insbesondere Transaktionen, welche in dem Distributed Ledger Netzwerk zu erfassen sind, je nach Meldungen oder Status-Meldungen der beteiligten Maschinen.

Die Erfindung betrifft ferner ein Verfahren zum Integrieren einer Maschine in ein bestehendes Distributed Ledger Netzwerk, wobei
- die zu integrierende Maschine sich mit einem aus einer Mehrzahl von vernetzten und mittels eines Managementsystems verwalteten Maschinen bestehenden Maschinennetzwerk vernetzt,
- wobei die Maschinen jeweils als Knoten oder Client eines Knotens in einem Distributed Ledger Netzwerk mitwirken,
- wobei die Maschinen jeweils Maschineneigenschaften als Datensatz hinterlegt auf einem jeweiligen Speicher der jeweiligen Maschine aufweisen und im Maschinennetzwerk austauschen,
- wobei die Maschinen jeweils ferner einen jeweiligen normalisierten Smart Contract auf demselben oder einem weiteren Speicher aufweisen und mittels des Distributed Ledger Netzwerkes austauschen,
- wobei das Managementsystem einen Integrations-Contract aufweist,
- wobei die zu integrierenden Maschinen den jeweiligen normalisierten Smart Contract dem Managementsystem bereitstellt und das Managementsystem den jeweiligen normalisierten Smart Contract auf vorherige, im Distributed Ledger Netzwerk bereits verfügbare Smart Contracts abgleicht und je nach Verfügbarkeit den jeweiligen normalisierten Smart Contract in das Distributed Ledger Netzwerk transformiert und wobei ein transformierter Smart Contract ein Kollaborationsmodell zwischen den vernetzten Maschinen regelt und in dem Distributed Ledger Netzwerk computerimplementiert ausgeführt wird.

Damit basiert auch dieser Aspekt der Erfindung auf einem vernetzten Maschinennetzwerk, bei dem Maschineneigenschaften ausgetauscht werden und nun zusätzlich Smart Contracts miteinander ausgetauscht werden und ein Smart Contract einer neuen, zu integrierenden Maschine im Distributed Ledger Netzwerk integriert wird. Beispielsweise werden die Schritte, dass Maschineneigenschaften ausgetauscht werden, und dass jeweilige normalisierte Smart Contracts ausgetauscht werden, zeitlich gleichzeitig ausgeführt. Ebenso ist es vorstellbar, dass bereits Maschineneigenschaften ausgetauscht wurden, um potentiell erfolgsversprechend kollaborierende Maschinen zu identifizieren und erst in einem nachgelagerten Schritt Smart Contracts ausgetauscht werden.

Insbesondere erfolgt das Vernetzen einer neu aufzunehmenden und integrierenden Maschine in das Maschinen-Netzwerk zeitlich vorgelagert oder in einem Schritt gemeinsam mit dem Übertragen von Maschineneigenschaften und/oder Smart Contracts.

Um einen unkontrollierten Austausch oder eine unkontrollierte Übernahme von Smart Contracts, die immer auch das Ausführen von in dem Smart Contract hinterlegten Programmen bedeuten kann, zu verhindern, wird der normalisierte Smart Contract einer Maschine durch das Management-System des MaschinenNetzwerkes überprüft. Dabei wird abgeglichen, ob der Smart Contract bereits bekannt ist oder im Distributed Ledger Netzwerk bereits verfügbar ist. Da der zu überprüfende Smart Contract in normalisierter oder standardisierter Form vorliegt, ist der auf einfache Weise mit bereits vorhandenen ebenfalls normalisiert oder standardisiert hinterlegten Smart Contracts vergleichbar.

Gemäß einer Ausgestaltung umfasst das Abgleichen den Schritt, dass im Falle eines bereits verfügbaren Smart Contracts betreffend gleiche Kollaborationspartner oder das gleiche Kollaborationsmodell der bereits verfügbare Smart Contract überschrieben wird. Der bereits verfügbare Smart Contract wird durch den normalisierten Smart Contract der zu integrierenden Maschine überschrieben. Somit ist vorteilhafterweise immer ein aktueller Smart Contract hinterlegt, was beispielsweise durch Verwendung einer Versionskennung erkennbar gemacht werden kann.

Gemäß einer Ausgestaltung umfasst das Abgleichen den Schritt, dass im Falle eines bereits verfügbaren Smart Contracts betreffend gleiche Kollaborationspartner oder das gleiche Kollaborationsmodell der jeweilige normalisierte Smart Contract unter Aufführung einer neuen Versionskennung hinterlegt wird. Es ist eine Historie anlegbar und es können im Nachhinein verschiedene Versionsstände nachverfolgt werden. Durch die Kollaborationspartner können insbesondere Maschinentypen festgelegt sein. Alternativ können auch Maschinen-Identitäten oder Maschinen-IDs hinterlegt sein, die als Teilnehmer am Smart Contract in Frage kommen.

Gemäß einer Ausgestaltung umfasst das Abgleichen den Schritt, dass im Falle eines bereits verfügbaren Smart Contracts betreffend gleiche Kollaborationspartner oder das gleiche Kollaborationsmodell der jeweilige normalisierte Smart Contract nicht oder nur unter bestimmten Voraussetzungen hinterlegt wird.

Beispielsweise handelt es sich in dem Fall, in dem ein früherer Smart Contract überschrieben wird, um einen Smart Contract einer anderen, später zu integrierenden Maschine, die die gleichen Bedingungen anbietet und dazu das Kollaborationsmodell im nun zu integrierenden Smart Contract abgefasst hat. Ebenso ist es denkbar, dass es sich um einen Smart Contract der gleichen Maschine handelt, die sich früher schon einmal vernetzt hat.

Die Voraussetzungen, unter welchen ein neuer Smart Contract installiert oder deployed werden darf, kann auf vorteilhafte Weise im Distributed Ledger Netzwerk festgelegt sein. Beispielsweise können in Betriebsbestimmungen, sogenannten Standard Operating Procedures, Voraussetzungen vorgesehen sein, die erfüllt sein müssen, damit ein zu integrierender Smart Contract hinterlegt wird. Es ist ferner denkbar, dass in einem bereits integrierten und installierten Smart Contract zukünftige Integrationen bestimmter Smart Contracts nicht erlaubt werden.

Gemäß einer Ausgestaltung umfasst das Abgleichen den Schritt, dass im Falle einer fehlenden Verfügbarkeit der jeweilige verfügbare Smart Contract hinterlegt wird. Beispielsweise muss dann nicht befürchtet werden, dass Bedingungen aus dem zu integrierenden Smart Contract mit Bedingungen früherer Smart Contracts in dem Distributed Ledger Netzwerk kollidieren.

Gemäß einer Ausgestaltung weist der normalisierte Smart Contract ein zugehöriges Interface zur Beschreibung von Methoden auf und die Methoden beschreiben Kollaborationsoptionen zwischen den Maschinen. Der Smart Contract und ein zugehöriges Interface sind beispielsweise miteinander verknüpft im MTP hinterlegt.

Dem Interface kommt dabei die Funktion zu, die Methoden und deren Argumente, die zum Ausführen bestimmter Transaktionen zur Erfüllung eines Vertrags erforderlich sind, zu beschreiben. Beispielsweise können Methoden aufgerufen werden, wie "Transfer-Token", d.h. die Ausführung einer Funktion, welche zur Übertragung von Token in dem Distributed Ledger Netzwerk führt. Durch den Transfer der Token wird insbesondere eine virtuelle Währung oder ein virtuelles Tauschmittel, der dem Wert der Leistung im Netzwerk entspricht, übertragen.

Gemäß einer Ausgestaltung beschreibt das Interface ferner Argumente, die als Eingabe für die Methoden verwendet werden. Es ist zusätzlich zur Methode, die aufgerufen wird, auch ein Argument zu übergeben, beispielsweise ein Betrag von zu übertragenden Token oder ein Adressat, der in der Methode abgebildet ist. Beispielsweise wird zusätzlich eine Kontext-ID oder eine Fahrzeug-ID übermittelt. Als Methode sind verschiedenste Funktionen vorstellbar, die für das Ausführen des Betriebes zur Befolgung der Vorgaben aus dem Smart Contract denkbar sind. Dabei beschreiben sie Kollaborationsoptionen zwischen den Maschinen, indem sie beschreiben, welche Funktionen von einem der beteiligten Maschinen im Rahmen der Ausführung des Smart Contracts aufrufbar sein sollen. Beispielsweise ist auch die Methode denkbar, die einen Bericht über eine erfüllte Aufgabe erstellen. Beispielsweise ist ein Argument eine Statusänderung.

Gemäß einer Ausgestaltung sind die Argumente standardisiert auf der Maschine hinterlegt und entsprechend insbesondere standardisierten Attributen der Maschineneigenschaften.

Gemäß einer Ausgestaltung beschreiben die Maschineneigenschaften Fähigkeiten einer jeweiligen Maschine und sind derart standardisiert hinterlegt, dass andere Maschinen Informationen zu den Fähigkeiten verarbeiten können. Vorteilhafterweise findet so ein Aushandeln von Fertigungsschritten oder Prozessketten autonom zwischen den Maschinen statt. Alternativ kann neben einer autonomen und selbstständigen Aushandlung unter den Maschinen das standardisierte Format auch von einem Managementsystem verwendet werden, welches die Verständigung der Maschinen untereinander überwacht oder übernimmt.

Gemäß einer Ausgestaltung wird der Smart Contract beim Transformieren mittels einer Normalisierungsfunktion in eine Form gebracht, die alle DLT-Netzwerkteilnehmer verstehen, oder die zum DLT-Netzwerk passt. Insbesondere wird der Smart Contract so auch in eine durch die Maschine aufrufbare Form gebracht. Je weniger normalisiert der Smart Contract vorliegt, desto aufwendiger ist die Normalisierungsfunktion zu gestalten. Für bereits in ausführbaren Code hinterlegte Smart Contracts kann die Normalisierungsfunktion einfacher ausgebildet sein und sich auf ein Aufrufen des Codes beschränken. Wird ein generalisierter normalisierter Smart Contract verwendet, so umfasst die Normalisierungsfunktion das Konvertieren in die aufrufbare Form.

Auf vorteilhafte Weise können in sogenannten intelligenten Maschinen oder Maschinen in Cyber-Physical Systems somit Automatisierungsprodukte vorgesehen sein, die die beschriebenen normalisierten Smart Contracts einerseits mitbringen und bereitstellen und andererseits in einem Distributed Ledger Netzwerk der Maschinen integrieren. Besonders vorteilhaft werden dafür schon vorhandene Maschinenbeschreibungs-Repositories genutzt.

Somit werden Maschinen automatisiert in Maschinennetzwerke einer Anlage, die beispielweise über ein Kommunikationsnetzwerk kommunizieren, und zugleich beispielweise in aus den gleichen Teilnehmern bestehende Maschinen-Blockchain-Netzwerken integriert. Insbesondere wird die Basis des Modul Type Package-Konzepts genutzt, das für den Austausch von Maschineneigenschaften sowie von Smart Contracts für die Teilhabe an einem Distributed Ledger-Netzwerk, insbesondere Block-Chain-Netzwerk, eingesetzt wird.

Die Erfindung betrifft ferner ein Computer-Programmprodukt mit einem Computer-Programm, das Mittel zur Durchführung des Verfahrens nach einem der oben beschriebenen Ausgestaltungen aufweist, wenn das Computer-Programm auf einer programmgesteuerten Einrichtung zur Ausführung gebracht wird. Insbesondere wird das Computer-Programm verteilt im Maschinennetzwerk und/ oder Distributed-Ledger-Netzwerk zur Ausführung gebracht.

Die Erfindung wird nachfolgend anhand von Ausführungsbeispielen mit Hilfe der Figuren näher erläutert. Es zeigen:
- Fig. 1: Eine schematische Darstellung eines Maschinennetzwerkes und eines Maschinen-Blockchain-Netzwerkes gemäß einem ersten Ausführungsbeispiel der Erfindung;
- Fig. 2: Eine schematische Darstellung eines Verfahrens zur Integration eines Smart Contracts einer Maschine in ein Blockchain-Netzwerk gemäß einem zweiten Ausführungsbeispiel der Erfindung.

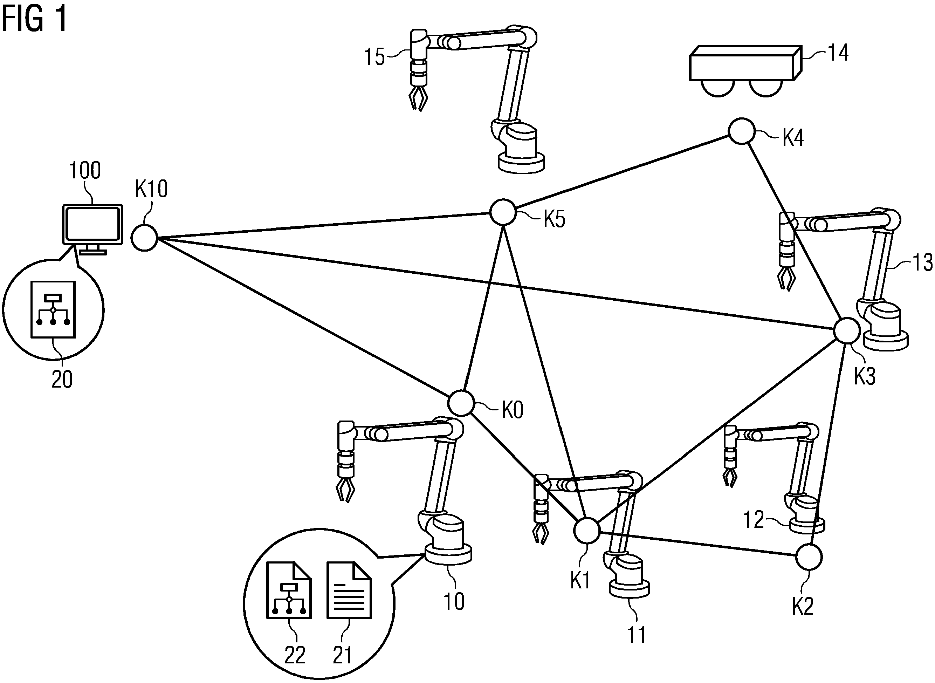

In der Figur 1 sind zur Veranschaulichung eines MaschinenNetzwerkes in einer Fabrik fünf Roboter 10, 11, 12, 13, 15 und ein AGV 14 gezeigt. Aus Darstellungsgründen wurde die Anzahl auf sechs Maschinen beschränkt, wobei Ausführungsbeispiele mit wesentlich mehr Maschinen, beispielsweise mehreren 100 Maschinen, vorstellbar sind. Die Roboter 10, 11, 12, 13, 15 sind für die Zwecke dieses ersten Ausführungsbeispiels als Greifarmroboter gezeigt. Ebenso sind andere Maschinen, die für eine Kollaboration in einem industriellen Automatisierungsnetzwerk vorstellbar sind, sowie andere Roboter, beispielsweise Parallelkinematiken oder andere serielle Kinematiken, insbesondere mit beliebig vielen Freiheitsgraden, vorteilhat einsetzbar.

Im ersten Ausführungsbeispiel sollen die Roboter 10, 11, 12, 13, 15 miteinander zusammenwirken, um mit verteilten Aufgaben ein Fertigungsteil zusammenzusetzen, beispielsweise ein printed circuit board. Dafür tauschen die Roboter 10, 11, 12, 13, 15 Informationen über ihre jeweiligen Maschineneigenschaften untereinander aus.

Es ist zudem gemäß dem ersten Ausführungsbeispiel ein sogenanntes AGV 14, autonomes guided vehicle, also ein autonom in der Anlage umherfahrendes Transport-Gerät im Einsatz. Das AGV 14 führt ein von den Robotern zu bearbeitendes Werkstück mit sich und transportiert es insbesondere zu den verschiedenen Robotern, die verschiedenen Fertigungsstationen angehören. Beispielshalber ist in Figur 1 für den Roboter 10 veranschaulicht, dass er einen Datensatz zu seinen Maschineneigenschaften 21 mitbringt, d.h. auf seinem Speicher hinterlegt hat, und beispielsweise von sich aus oder auf Anfrage im Maschinennetzwerk bekannt gibt. Es folgt eine sogenannte skillbasierte Planung von Fertigungsschritten, wobei die Planung zentral durch die Instanz des Managementsystems erfolgen kann oder ebenso dezentral, verteilt auf den Robotern. Beispielsweise ist in dem Netzwerk eine Teilaufgabe der Gesamtfertigungsaufgabe zu erledigen und es wird anhand von Maschineneigenschaften, die die Auslastung der einzelnen Maschine betreffen, entschieden, welcher Roboter die Teilaufgabe übernimmt. Ebenso kann die Entscheidung anhand einer Angabe zur Schnelligkeit, mit der einer der Roboter die Teilaufgabe abarbeiten kann, getroffen werden.

Gemäß dem ersten Ausführungsbeispiel der Erfindung soll die Fertigungsanlage zusätzlich Blockchain-basiert arbeiten können. Dafür sollen die einzelnen Roboter 10, 11, 12, 13, 15 sowie das AGV 14 jeweils Knoten K0, K1, K2, K3, K4, K5 eines Blockchain-Netzwerkes bilden. D. h. die Maschinen sollen jeweils am Blockchain Netzwerk teilhaben können, insbesondere durch Übermitteln von Transaktionen in das Blockchain Netzwerk und/ oder Speichern der Blockchain Datenbank.

Beispielsweise handelt es sich um eine private Blockchain Struktur oder eine sogenannte Konsortium Blockchain Struktur, bei der die Teilnahme am Blockchain Netzwerk auf die Teilnehmer des Fertigungsnetzwerkes beschränkt ist. Im industriellen Umfeld werden beispielsweise private Blockchains eingesetzt, bei welchen das Konsensus-Verfahren innerhalb eines Konsortiums stattfindet, dessen Mitglieder beispielsweise einander oder einer Verwaltungsinstanz bekannt sind oder ein bestimmtes Vertrauensniveau erfüllen. Beispielsweise können nur Knoten in Blockchain Netzwerk teilnehmen, die im Kommunikationsnetzwerk der Fertigungsanlage authentifiziert wurden.

Das Blockchain Netzwerk innerhalb der Fertigungsanlage bietet bekannte Vorteile wie eine dezentral verfügbare Datenhaltung, manipulationsgeschützt hinterlegte Transaktionen und nachverfolgbare Transaktionsketten. Überdies wird das Blockchain Netzwerk gemäß dem ersten Ausführungsbeispiel derart genutzt, dass Smart Contracts, die Kollaborationsmodelle zwischen den Robotern abbilden, gegenseitig bekannt gemacht werden und ausgeführt werden. Es entsteht damit auf besonders vorteilhafte Weise eine Synergie von einem Kommunikationsnetzwerk mit Austausch von Maschineneigenschaften sowie einem Block-chain Netzwerk zum Ausführen von Smart Contracts, die die Zusammenarbeit der Roboter mit ihren jeweiligen Eigenschaften und Kollaborationsbedingungen erst voll-autonom ermöglicht.

Figur 1 veranschaulicht wiederum für den Roboter 10, dass er neben den Maschineneigenschaften 21 auch einen Smart Contract 22 auf seinem Speicher hinterlegt hat. Die Maschineneigenschaften 21 und der Smart Contract 22 sind der Übersichtlichkeit halber nur für den Roboter 10 abgebildet, können aber vorteilhaft bei allen Robotern oder allgemein gesprochen bei autonom oder zumindest flexibel innerhalb einer Anlage einsetzbaren Maschinen vorhanden sein.

Beispielshalber sind in der Fertigungsanlage zwei Fräsroboter 12, 13 im Kommunikationsnetzwerk integriert. Beispielsweise wurden beide Roboter über eine Maschinen-ID authentifiziert und mithilfe von kryptografischen Verfahren über die Kommunikationsverbindung authentifiziert. Beide Roboter sind dafür beispielsweise mit kryptographischen Schlüsseln ausgestattet. Beide Fräsroboter übermitteln beispielsweise ihre jeweilige Eigenschaft, ein spezifisches Fräsverfahren durchführen zu können. Beispielsweise wird diese Information an das AGV 14 gesendet, welches ein zu fräsendes Teil mit sich führt. Beispielsweise obliegt es dem AGV, einen der beiden Fräsroboter 12, 13 auszuwählen. Neben den Maschineneigenschaften, die zu den beiden Fräsrobotern vorliegen, liegen auch Informationen zu einem von dem jeweiligen Fräsroboter angebotenen Kollaborationsmodell vor.

Das Kollaborationsmodell beschreibt dabei, zu welchen Bedingungen, insbesondere zu welchem virtuellen Preis, das Fräsverfahren durchgeführt werden kann. Beispielsweise repräsentiert der virtuelle Preis eine Auslastung des jeweiligen Fräsroboter. Der Preis für ein Fräsverfahren von einem aufgrund seiner räumlichen Lage in der Anlage häufig frequentierten Roboters ist beispielsweise höher als ein weniger frequentierte Roboter. Dies kann beispielsweise wiederum in die zentrale oder dezentrale Planung für das Fertigungsverfahren eingehen, beispielsweise indem das Verfahren auf Kosteneffizienz hin optimiert wird.

Anhand des Smart Contracts wird einerseits die Information verfügbar gemacht, zu welchen Konditionen eine Kollaboration mit einem jeweiligen Roboter durchführbar ist. Diese Information ist in der Blockchain gespeichert und kann somit beispielsweise von dem AGV 14 abgefragt werden. Überdies kann ferner in dem Blockchain Netzwerk die Kollaboration Block-chain-unterstützt über die Smart Contracts abgewickelt werden. Als Bestandteil der Kollaboration ist beispielsweise auch geregelt, welche Aktionen nach Beendigung der Teilaufgabe durch einen Fräsroboter angestoßen werden, beispielsweise wie ein digitaler Zwilling eines Werkstücks angepasst wird oder welche Transaktionen betreffend eine Bezahlung der Leistung in der Blockchain gesichert hinterlegt werden.

Die Smart Contracts bilden als ausführbare Logik somit die Basis, den gesamten Ablauf beispielsweise einer Fertigung, der aufgrund der Maschineneigenschaften und Kollaborationsmodelle geplant oder festgelegt wird, zu begleiten oder zu dokumentieren und durch Sicherung von konsistenten Datensätzen in der Blockchain zu unterstützen.

In der Anlage kann vorteilhafterweise ein Managementsystem 100 als zentrale Instanz vorgesehen sein, das insbesondere überall dort in den Fertigungsprozess eingreift, wo nicht autonome Maschinen beteiligt sind. Überdies kann das Managementsystem übergeordnete Aufgaben oder Koordinierungsaufgaben mit weiteren Fabrikeinheiten oder Logistikeinheiten wahrnehmen. Beispielsweise koordiniert das Managementsystem 100 den Beitritt und die Authentifizierung von Maschinen zum Maschinennetzwerk. Ferner weist das Managementsystem einen Integrations-Contract 20 auf, der auch als Onboarding Smart Contract bezeichnet werden kann. Dafür interagiert auch das Managementsystem als Knoten

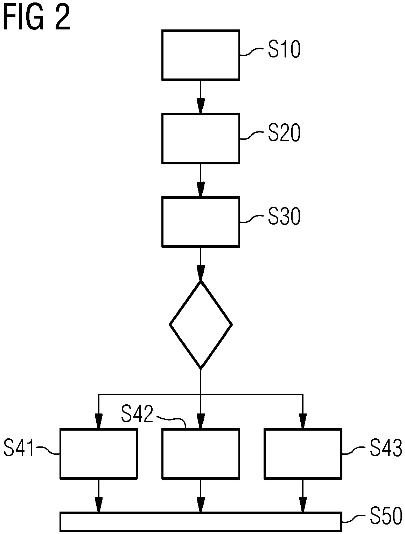

Die Funktionsweise des Integrations-Contracts 20 wird anhand von Figur 2 und einem zweiten Ausführungsbeispiel näher erläutert. In einem ersten Schritt S10 vernetzt sich ein Roboter 10 mit zugehörigem Smart Contract 22 mit dem Blockchain Netzwerk. Dafür durchläuft er beispielsweise vorab einen Authentifizierungsprozess, um als ein teilnehmender Knoten in dem Blockchain Netzwerk agieren zu können. Dieser Schritt stellt insbesondere einen Schritt innerhalb eines Onboarding-Prozesses dar. In einem zweiten Schritt S20 stellt der Roboter 10 seinen normalisierten Smart Contract 22 dem Blockchain Netzwerk bereit. Dabei wird der normalisierte Smart Contract 22 beispielsweise als Transaktion im Netzwerk veröffentlicht und die Transaktion beispielsweise mit dem im Netzwerk vereinbarten Konsensmechanismus validiert.

Der normalisierte Smart Contract 22 wird in einem dritten Schritt S30 vor dem Einsatz im Blockchain Netzwerk mit im Blockchain Netzwerk vorhandenen Smart Contracts abgeglichen. Ziel ist dabei, den neu aufzunehmenden Smart Contract auf Verträglichkeit mit bereits gültigen Smart Contract und auf Unbedenklichkeit hin zu überprüfen. Für diesen Überprüfungsvorgang ist der Integrations-Contract 20 vorgesehen. Der Integrations-Contract 20 kann zentral auf dem Managementsystem hinterlegt sein.

Generell kann das Management System 100 auch als dezentrale Instanz vorgesehen sein, die beispielsweise über einige Knoten verteilt ist. Es ist dabei sicherzustellen, dass zumindest ein festlegbarer Anteil der Knoten, die Aufgaben des dezentralen Managementsystems wahrnehmen, dauerhafter Bestandteil des Netzwerkes sind.

Somit kann der Integrations-Contract 20 ebenso dezentral im Blockchain Netzwerk, zumindest auf denjenigen Knoten, die das Managementsystem bilden, und insbesondere auf allen teilnehmenden Knoten hinterlegt sein.

In Szenarien, in welchen aufgrund der Systemstruktur des Maschinennetzwerkes bereits eine zentrale Einheit vorhanden ist, kann diese vorteilhaft zusätzlich für die Aufgabe des Smart Contract Onboardings genutzt werden.

Die Prüfung des normalisierten Smart Contracts 22 kann ergeben, dass der gleiche Smart Contract bereits zu einem früheren Zeitpunkt im Blockchain Netzwerk hinterlegt wurde. Für diesen Fall kann beispielsweise ein vierter Schritt S41 des Überschreibens des alten Smart Contracts oder ein Hinterlegen des neuen Smart Contracts mit gleicher Kennung und neuer Versionsnummer folgen.

In einem alternativen vierten Schritt S42 erfolgt das Hinterlegen eingeschränkt, beispielsweise nur, wenn die Option auf eine Ablösung in den Betriebsbestimmungen, den sogenannten SOPs, vorgesehen ist. Beispielsweise soll verhindert werden, dass durch das Einbinden des neuen Smart Contracts ungewollt Rückwirkungen auf vorhandene Kollaborationen entstehen. Zugleich soll aber auch ermöglicht werden, dass bereits etablierte Kollaborationen bei Bedarf auf einen aktuelleren Smart Contract umstellen können.

Beispielsweise leistet ein neuer Smart Contract, der von dem AGV 14 in einer Anlage neu etabliert werden soll, eine bessere Fehlerbehebung. Andere AGVs der Anlage, die unter den gleichen Bedingungen eingesetzt werden sollen wie das neue zu integrierende AGV 14, die also das gleiche Kollaborationsmodell anbieten, sollen ebenfalls den neuen Smart Contract nutzen können. Für manche Anlagen, insbesondere kontinuierliche Prozesse, soll ein Umsteigen auf den neueren Smart Contract beispielsweise nur während einer planned downtime Phase, also einer zu Zwecken von Updates oder sonstigen Wartungen in der Anlage vorgesehenen Ausfallzeit, vorgenommen werden können.

Die Prüfung kann ferner ergeben, dass ein normalisierter Smart Contract 22 unbekannt ist.

Es kann daher auch der weitere alternative vierte Schritt S43 vorgesehen sein, dass der normalisierte Smart Contract 22 neu angelegt wird. Insbesondere kann das Managementsystem bei unbekannten Smart Contracts verfügbare Informationen auf bestimmte Anforderungen hin untersuchen, z.B. auf Vetrauenswürdigkeit der Headerinformationen oder Code-Konsistenz.

Es schließt sich an die verschiedenen alternativen Schritte der fünfte Schritt S50 der Transformation des normalisierten Smart Contracts 22 an, der zu einem in dem Blockchain-Netzwerk ausführbaren Code führt. Beispielsweise ist der normalisierte Smart Contract 22 des AGVs 14 eine aktualisierte Version eines Smart Contracts, der Regeln zum Übernehmen von Transportvorgängen von Werkstücken durch das AGV abbildet. Das AGV 14 lässt diesen über den Onboarding Contract des Managementsystems im System deployen.

Das AGV 14 nutzt beispielsweise das Module Type Package Verfahren, um Maschineneigenschaften 21 wie beispielsweise eine in Abhängigkeit vom Batterieladezustand verbleibende Betriebslaufzeit anzugeben. Ebenfalls im MTP hinterlegt ist der normalisierte Smart Contract 22, der vorteilhafterweise in der gleichen standardisierten Sprache wie die Maschineneigenschaften 21, beispielsweise in AML (automation markup language), hinterlegt ist. So wird vorteilhafterweise ein gemeinsames standardisiertes Format in einem ebenfalls gemeinsam verwendeten standardisierten Austauschverfahren (MTP) für die Handhabung der Maschineneigenschaften 21 und des Smart Contracts 22 eingesetzt.

Das Managementsystem 100 wendet auf den normalisierten Smart Contract 22 eine Normalisierungsfunktion an und wandelt ihn in einen ausführbaren Smart Contract Code um. Je nach Block-chain-Platform wird Code in den Programmiersprachen Solidity, NodeJS oder Go etc. zur Ausführung gebracht.

Es wird somit insgesamt in den verschiedenen vorgestellten Ausprägungen eine industrietaugliche Transformation von Smart Contracts, die zwischen Maschinen für eine vereinfachte Kollaboration der Maschinen untereinander eingesetzt werden, bereitgestellt.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. System bestehend aus einer Mehrzahl von vernetzten und mittels eines Managementsystems (100) verwalteten Maschinen (10, 11, 12, 13, 14, 15), wobei die Maschinen (10, 11, 12, 13, 14, 15) und das Managementsystem (100) jeweils als Knoten (K0, K1, K2, K3, K4, K5) oder Clients eines Knotens (K0, K1, K2, K3, K4, K5) eines Distributed-Ledger-Netzwerkes interagieren, wobei die Maschinen (10, 11, 12, 13, 14, 15) jeweils Maschineneigenschaften (21) als Datensatz hinterlegt auf einem jeweiligen Speicher der jeweiligen Maschine (10, 11, 12, 13, 14, 15) aufweisen, wobei die Maschinen (10, 11, 12, 13, 14, 15), jeweils ferner einen jeweiligen normalisierten Smart Contract (22) auf demselben oder einem weiteren Speicher aufweisen, wobei das Managementsystem (100) einen Integrations-Contract (20) aufweist, wobei der Integrations-Contract (20) ausgebildet ist, jeweilige normalisierte Smart Contracts (22) auf vorherige, im Distributed-Ledger-Netzwerk bereits verfügbare Smart Contracts abzugleichen und in das Distributed-Ledger-Netzwerk zu transformieren, und wobei ein transformierter Smart Contract ausgebildet ist, ein Kollaborationsmodell zwischen den vernetzten Maschinen (10, 11, 12, 13, 14, 15) zu regeln und in dem Distributed-Ledger-Netzwerk computerimplementiert ausgeführt zu werden.

2. System nach Anspruch 1, wobei das Kollaborationsmodell Geschäftsbedingungen zum Durchführen von Arbeitsschritten und/ oder Nutzungsbedingungen und/ oder Statusänderungen je nach durchgeführtem Arbeitsschritt umfasst.

3. System nach Anspruch 1 oder 2, wobei die Maschineneigenschaften (21) in einem standardisierten, insbesondere mittels der Module Type Package-Methode austauschbaren, Format vorliegen und der jeweilige normalisierte Smart Contract (21) im gleichen standardisierten Format vorliegt.

4. System nach einem der vorstehenden Ansprüche, wobei als standardisiertes Format Automation Markup Language oder mindestens ein ausführbares Code-Format, insbesondere Solidity oder Hyperledger Fabric Chaincode, vorgesehen ist.

5. System nach einem der vorstehenden Ansprüche, wobei der Smart Contract ein dynamisches Modell für logische Verknüpfungen zwischen den Maschinen (10, 11, 12, 13, 14, 15) beschreibt.

6. Verfahren zum Integrieren einer Maschine (10) in ein bestehendes Distributed-Ledger-Netzwerk, wobei
- die zu integrierende Maschine (10) sich mit einem aus einer Mehrzahl von vernetzten und mittels eines Managementsystems (100) verwalteten Maschinen (11, 12, 13, 14, 15) bestehenden Maschinennetzwerk vernetzt,
- wobei die Maschinen (10, 11, 12, 13, 14, 15) jeweils als Knoten oder Client eines Knotens in einem Distributed-Ledger-Netzwerkes mitwirken,
- wobei die Maschinen (10, 11, 12, 13, 14, 15) jeweils Maschineneigenschaften (21) als Datensatz hinterlegt auf einem jeweiligen Speicher der jeweiligen Maschine aufweisen und im Maschinennetzwerk austauschen,
- wobei die Maschinen (10, 11, 12, 13, 14, 15) jeweils ferner einen jeweiligen normalisierten Smart Contract (22) auf demselben oder einem weiteren Speicher aufweisen und mittels des Distributed-Ledger-Netzwerkes austauschen,
- wobei das Managementsystem (100) einen Integrations-Contract (20) aufweist,
- wobei die zu integrierende Maschine (10) den jeweiligen normalisierten Smart Contract (22) dem Managementsystem (100) bereitstellt und das Managementsystem (100) den jeweiligen normalisierten Smart Contract (22) auf vorherige, im Distributed-Ledger-Netzwerk bereits verfügbare Smart Contracts abgleicht und je nach Verfügbarkeit den jeweiligen normalisierten Smart Contract (22) in das Distributed-Ledger-Netzwerk transformiert und wobei ein transformierter Smart Contract ein Kollaborationsmodell zwischen den vernetzten Maschinen regelt und in dem Distributed-Ledger-Netzwerk computerimplementiert ausgeführt wird.

7. Verfahren nach Anspruch 6, wobei das Abgleichen den Schritt umfasst, dass im Falle eines bereits verfügbaren Smart Contracts betreffend gleiche Kollaborationspartner oder das gleiche Kollaborationsmodell der bereits verfügbare Smart Contract überschrieben wird.

8. Verfahren nach Anspruch 6, wobei das Abgleichen den Schritt umfasst, dass im Falle eines bereits verfügbaren Smart Contracts betreffend gleiche Kollaborationspartner oder das gleiche Kollaborationsmodell der jeweilige normalisierte Smart Contract (22) unter Verwendung einer neuen Versionskennung hinterlegt wird.

9. Verfahren nach einem der Ansprüche 6 bis 8, wobei das Abgleichen den Schritt umfasst, dass im Falle eines bereits verfügbaren Smart Contracts betreffend gleiche Kollaborationspartner oder das gleiche Kollaborationsmodell der jeweilige normalisierte Smart Contract (22) nicht oder nur unter bestimmten Voraussetzungen hinterlegt wird.

10. Verfahren nach einem der Ansprüche 6 bis 9, wobei das Abgleichen den Schritt umfasst, dass im Falle einer fehlenden Verfügbarkeit der jeweilige normalisierte Smart Contract (22) hinterlegt wird.

11. Verfahren nach einem der Ansprüche 6 bis 10, wobei der normalisierte Smart Contract (22) ein zugehöriges Interface zur Beschreibung von Methoden aufweist und wobei die Methoden Kollaborationsoptionen zwischen den Maschinen (10, 11, 12, 13) beschreiben.

12. Verfahren nach Anspruch 11, wobei das Interface ferner Argumente beschreibt, die als Eingabe für die Methoden verwendet werden.

13. Verfahren nach Anspruch 12, wobei die Argumente standardisiert auf der Maschine hinterlegt sind und insbesondere standardisierten Attributen der Maschineneigenschaften entsprechen.

14. Verfahren nach einem der Ansprüche 6 bis 13, wobei die Maschineneigenschaften (21) Fähigkeiten einer jeweiligen Maschine (10) beschreiben und derart standardisiert hinterlegt sind, dass jeweilige andere Maschinen (11, 12, 13) Informationen zu den Fähigkeiten verarbeiten können.

15. Verfahren nach einem der Ansprüche 6 bis 14, wobei der transformierte Smart Contract durch eine Normalisierungsfunktion in eine Form gebracht wird, die von Teilnehmern des Distributed-Ledger-Netzwerks verstanden wird oder die zum Distributed-Ledger-Netzwerk passt.
